# EUROPÄISCHE PATENTANMELDUNG

(11) **EP 2 149 396 A1**
(43) Veröffentlichungstag der Anmeldung: **03.02.2010**
(21) Anmeldenummer: 08013819.1
(22) Anmeldetag: 01.08.2008
(51) Int. Cl.: B01D 53/50, B01D 53/73, B01F 3/04

(54) **Vorrichtung zum Einbringen von gasförmigen Oxidationsmitteln in Waschflüssigkeiten**

(71) Anmelder: AE & E Lentjes GmbH, 40880 Ratingen (DE)
(72) Erfinder: Kehrmann, Kai Matthias, 44629 Herne (DE); Ziemann-Nöthe, Annette, Dr., 45136 Essen (DE); Oberheid, Frank, 46047 Oberhausen (DE)
(74) Vertreter: Becker, Thomas

(57) **Zusammenfassung**

Die vorliegende Erfindung betrifft eine Vorrichtung zum Einbringen von gasförmigen Oxidationsmitteln in Waschflüssigkeiten von Rauchgasentschwefelungsanlagen, insbesondere in Kohlekraftwerken oder Müllverbrennungsanlagen. Die erfindungsgemäße Vorrichtung zum Einbringen von gasförmigen Oxidationsmitteln in eine Waschflüssigkeit einer Rauchgasentschwefelungsanlage, weist einen Anschlussabschnitt, einen gasführenden Teil und einen Gasaustritt auf und ist **dadurch gekennzeichnet, dass** die Vorrichtung ringförmig, stabförmig, domförmig, tellerförmig, dreieckig oder quadratisch ausgebildet ist und der Gasaustritt durch eine perforierte Membran, ein Gitter, eine Lochblender, einer porösen Keramik oder einem porösen Kunststoff gebildet ist und der Gasaustritt mit dem Anschlussabschnitt über den gasführenden Teil verbunden ist.

## Beschreibung

Die vorliegende Erfindung betrifft eine Vorrichtung zum Einbringen von gasförmigen Oxidationsmitteln in Waschflüssigkeiten von Rauchgasentschwefelungsanlagen, insbesondere in Kohlekraftwerken oder Müllverbrennungsanlagen.

Vorrichtungen zur Reinigung von Rauchgas sind weitläufig bekannt. Sie umfassen normalerweise einen Absorptionsbereich, in welchem Waschflüssigkeitsdüsen angeordnet sind und durch welchen das zu reinigende Rauchgas vertikal oder im Wesentlichen horizontal strömt. Je nach Ausgestaltung des Absorptionsbereichs können in diesem Waschflüssigkeitsdüsen in mehreren Ebenen angeordnet sein. Aus den Waschflüssigkeitsdüsen wird eine zur Absorption von Verunreinigungen wie Schwefelverbindungen geeignete Waschflüssigkeit in den Rauchgasstrom eingebracht. Schwerkraftbedingt sammelt sich die eingebrachte Waschflüssigkeit in einem am Boden des Absorptionsbereiches angeordneten Waschflüssigkeitssumpf. Entsprechende Rauchgasreinigungsvorrichtungen sind beispielsweise aus der DE-A-100 58 548 bekannt.

Die Waschflüssigkeit ist im Fall der Rauchgasentschwefelung in der Regel eine wässrige Lösung von Erdalkaliverbindungen, die mit den im Rauchgas vorhandenen Schwefelverbindungen unter Bildung entsprechender Erdalkalisulfate reagieren. Besonders geeignet sind hierzu wässrige Kalklösungen, welche mit den im Rauchgas vorhandenen Schwefelverbindungen zu im Wesentlichen Calciumsulfat reagieren. Auf diese Weise wird das Rauchgas von unerwünschten Schwefelverbindungen wie Schwefeloxiden gereinigt. Darüber hinaus entsteht ein wiederverwertbares Nebenprodukt, welches über ähnlich vorteilhafte Eigenschaften wie Naturgips verfügt. Das bei der Rauchgasentschwefelung erhaltene Calciumsulfat wird aus der Waschflüssigkeit abgetrennt und zu verschiedenen Werkstoffen wie insbesondere Bauwerkstoffen weiterverarbeitet.

Ein Problem bei der Gewinnung von Calciumsulfat besteht darin, dass während der Absorption der Schwefelverbindungen aus dem Rauchgas das in der Waschflüssigkeit enthaltene Calciumhydroxid mit dem im Rauchgas enthaltenen Schwefelverbindungen nicht direkt zu Calciumsulfat reagiert, sondern in einem ersten Reaktionsschritt Sulfite und Bisulfite bildet, welche durch Einbringen eines geeigneten Oxidationsmittels zu den entsprechenden Sulfaten aufoxidiert werden müssen.

Um die primär gebildeten Sulfite und Bisulfite in der Waschflüssigkeit im Waschflüssigkeitssumpf in Sulfate zu überführen wird mit der US-A-4,539,184 vorgeschlagen, in zumindest einem Bereich des Waschflüssigkeitssumpfes Sauerstoff in Form von Luft oder dergleichen einzubringen, um die vorhandenen Sulfite und Bisulfite zu Sulfate aufzuoxidieren.

Auch die CA-A-2135430 beschreibt eine Rauchgasreinigungsvorrichtung mit einer im Waschflüssigkeitssumpf vorgesehenen Oxidationseinrichtung in Form eines horizontal angeordneten Gitters bestehend aus Sauerstoffzuführleitungen mit entsprechenden Öffnungen, durch die Sauerstoff in die im Waschflüssigkeitssumpf gesammelte Waschflüssigkeit eingeleitet werden kann. Das horizontale Gitter ist derart in dem Waschflüssigkeitssumpf positioniert, dass dieser in zwei Bereiche unterteilt wird.

Ein Problem bei der Einbringung von Oxidationsluft in den Waschflüssigkeitssumpf einer Rauchgasreinigungsvorrichtung besteht darin, eine möglichst gleichmäßige Verteilung von Oxidationsmittel in dem Waschflüssigkeitssumpf zu erreichen, um eine möglichst gleichmäßige Umsetzung der gebildeten Sulfite und Bisulfite in Sulfate zu gewährleisten.

Es ist daher die **Aufgabe** der vorliegenden Erfindung, eine Vorrichtung anzugeben, mit welcher eine möglichst gleichmäßige Einbringung von gasförmigen Oxidationsmitteln in eine Waschflüssigkeit einer Rauchgasentschwefelungsanlage gewährleistet werden kann.

**Gelöst** t wird diese Aufgabe durch eine Vorrichtung zum Einbringen von gasförmigen Oxidationsmitteln in eine Waschflüssigkeit einer Rauchgasentschwefelungsanlage, wobei die Vorrichtung einen Anschlussabschnitt, einen gasführenden Teil und einen Gasaustritt aufweist, und dadurch gekennzeichnet ist, dass die Vorrichtung ringförmig, stabförmig, domförmig, tellerförmig, dreieckig oder quadratisch ausgebildet ist und der Gasaustritt durch eine perforierte Membran, ein Gitter, eine Lochblende, eine poröse Keramik oder einen porösen Kunststoff gebildet ist und der Gasaustritt mit dem Anschlussabschnitt über den gasführenden Teil verbunden ist.

Zur Erzeugung einer möglichst großen Grenzfläche zwischen der Waschflüssigkeit einerseits und dem eingebrachten gasförmigen Oxidationsmittel andererseits und dem damit einhergehenden intensiven Stoffaustausch ist es erfindungsgemäß vorgesehen, möglichst viele kleine einzelne Gasblasen des gasförmigen Oxidationsmittels in der Waschflüssigkeit zu erzeugen. In der Ausgestaltung der Erfindung mit einem aus einer perforierten Membran, einem Gitter oder einer Lochblende gebildeten Gasaustritt ist es daher vorgesehen, im Gasaustritt Austrittslöcher und/oder Austrittsschlitze mit einem mittleren Lochdurchmesser/Schlitzweite von 0,01 mm bis 5 mm, bevorzugt von 0,1 mm bis 1,2 mm vorzusehen.

Der Gasaustritt kann in einem solchen Fall wenigstens 2 Austrittslöcher je cm², bevorzugt wenigstens 4 Austrittslöcher je cm² aufweisen.

In einer weiteren Ausgestaltung der erfindungsgemäßen Vorrichtung ist das Verhältnis der äußeren Oberfläche des gasführenden Teils zur Oberfläche des Gasaustrittes ≤ 2,0.

In der Ausgestaltung der erfindungsgemäßen Vorrichtung mit einem aus einer perforierten Membran gebildeten Gasaustritt kann vorteilhafterweise eine perforierte Ethylen-Propylen-Dienkautschukmembran (EPDM-Membran) als Gasaustritt vorgesehen sein. Hierbei zeichnet sich eine EPDM-Membran durch ihre hohe chemische Resistenz gegenüber den Bedingungen in dem Waschflüssigkeitssumpf einerseits und einer hohen Flexibilität andererseits aus. Durch die hohe Flexibilität der Membran kann diese beim Austreten der Gasblasen aus den Perforationslöchern in Schwingung versetzt werden, wodurch eine Ablagerung von Calciumsulfat auf der Membranoberfläche vermieden wird.

Im Fall der Ausgestaltung des Gasaustrittes in Form eines Gitters oder einer Lochblende wird vorteilhafterweise als Material für das Gitter oder die Lochblende Kunststoff oder Edelstahl verwendet. Beide Materialien besitzen gegenüber den im Waschflüssigkeitssumpf herrschenden Bedingungen eine hinreichende Beständigkeit.

In einer Ausgestaltung der erfindungsgemäßen Vorrichtung mit einem aus einem Gitter oder einer Lochblende gebildeten Gasaustrittes kann unterhalb des Gasaustrittes eine Vorrichtung vorgesehen sein, durch welche das Gitter oder die Lochblende kontinuierlich oder in freiwählbaren Abständen in Schwingung versetzt wird, wodurch etwaige Calciumsulfatablagerungen auf der Gitter- oder Lochblendenoberfläche abgelöst werden können. Eine solche Vorrichtung kann beispielsweise ein Ultraschallschwinger oder eine Einrichtung zur Erzeugung von niederfrequenten Vibrationen sein.

In der erfindungsgemäß vorzusehenden Ausgestaltung der Vorrichtung mit einem aus einer porösen Keramik gebildeten Gasaustritt kann die poröse Keramik auf Basis von Silikaten, Aluminiumsilikaten oder Cordierit gebildet sein. Der mittlere Porendurchmesser der erfindungsgemäß als Gasaustritt einsetzbaren porösen Keramik kann in einem Bereich zwischen 10 µm und 500 µm liegen, wobei ein Bereich zwischen 40 µm und 180 µm bevorzugt ist.

In der erfindungsgemäß vorzusehenden Ausgestaltung der Vorrichtung mit einem aus einem porösen Kunststoff gebildeten Gasaustritt kann der Kunststoff beispielsweise ein HDPE oder ein Styrolacrylnitril sein. Auch hier kann der mittlere Porendurchmesser in einem Bereich zwischen 10 µm und 500 µm mit einem bevorzugten Bereich zwischen 40 µm und 180 µm liegen.

Durch die erfindungsgemäße Ausgestaltung einer Vorrichtung zum Einbringen von gasförmigen Oxidationsmitteln in eine Waschflüssigkeit einer Rauchgasentschwefelungsanlage wird eine große Anzahl von sehr kleinen Gasblasen in der Waschflüssigkeit erzeugt. Durch die große Anzahl kleiner Gasblasen wird die Gas-/Flüssigkeitsgrenzfläche vergrößert und es kommt zu einem intensiveren Stoffaustausch, wodurch die Oxidation der primärgebildeten Sulfite und Bisulfite in Sulfate optimiert wird. Auf der anderen Seite besitzen kleine Gasblasen eine deutlich geringere Aufstiegsgeschwindigkeit in der Waschflüssigkeit als große Gasblasen, was durch die verlängerte Kontaktzeit zu einer weiteren Verbesserung des Stoffaustausches und somit zu einer Optimierung des Oxidationsprozesses führt.

Hierbei hat sich insbesondere auch die erfindungsgemäße Geometrie der Vorrichtung als günstig erwiesen. Insbesondere durch die ringförmige oder stabförmige Ausgestaltung der Vorrichtung können diese in mehreren Ebenen versetzt zueinander in dem Waschflüssigkeitssumpf angeordnet sein, ohne dass es zu einer Behinderung des Blasenaufstiegsweges in der Waschflüssigkeit kommt. Hierdurch wird die Agglomeration von kleinen Luftblasen zu größeren Luftblasen deutlich verringert. Hierdurch wird eine längere Verweilzeit des eingebrachten Gasvolumens in der Waschflüssigkeit erreicht, da, wie zuvor beschrieben, kleinere Gasblasen eine niedrige Aufstiegsgeschwindigkeit in der Waschflüssigkeit besitzen als größere Gasblasen.

In einer weiteren Ausgestaltung der erfindungsgemäßen Vorrichtung ist der Gasaustritt leicht austauschbar an der Vorrichtung befestigt. Hierdurch kann im Fall eines Schadens an einem Gasaustritt dieser schnell ausgewechselt werden, wodurch eventuelle Ausfallzeiten der Rauchgasreinigungsvorrichtung insgesamt verringert werden.
Fig. 1a zeigt eine erfindungsgemäße Vorrichtung, welche ringförmig ausgebildet ist.
Fig. 1b zeigt eine erfindungsgemäße Vorrichtung, welche stabförmig ausgebildet ist.
Fig. 2 zeigt den Querschnitt einer erfindungsgemäßen Vorrichtung.

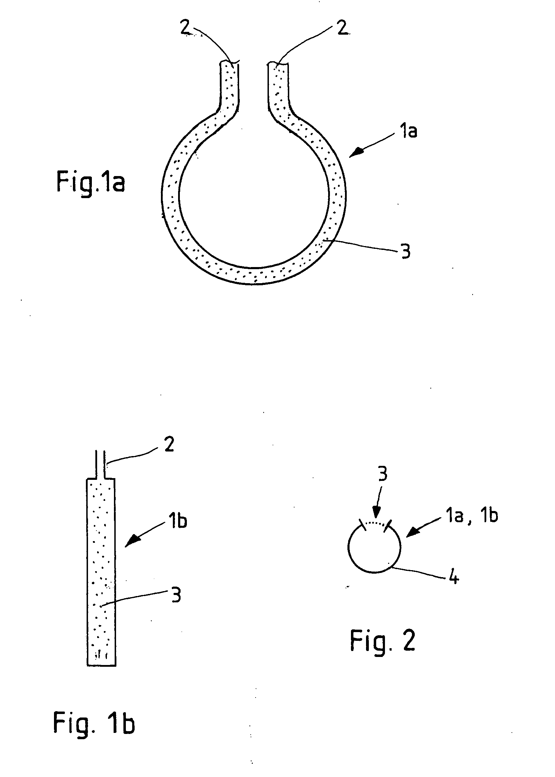

In Fig. 1a ist eine ringförmig ausgestaltete erfindungsgemäße Vorrichtung 1a zum Einbringen von gasförmigen Oxidationsmitteln in eine Waschflüssigkeit einer Rauchgasentschwefelungsanlage gezeigt, welche über zwei Anschlussabschnitte 2 verfügt. Über die Anschlussabschnitte 2 wird gasförmiges Oxidationsmittel in die ringförmige Vorrichtung 1a eingebracht, welches über den Gasaustritt 3 austreten kann. In einer alternativen Ausgestaltung kann auch lediglich ein Anschlussabschnitt 2 vorgesehen sein. Hierbei kann die Vorrichtung 1a auch als geschlossener Ring ausgestaltet sein.

In Fig. 1b ist eine stabförmig ausgebildete erfindungsgemäße Vorrichtung 1b gezeigt, welche über einen Anschlussabschnitt 2 mit gasförmigen Oxidationsmittel, vorzugsweise Luft, beaufschlagt wird. Die beaufschlagte Luft kann über den Gasaustritt 3 aus der erfindungsgemäßen Vorrichtung in Form kleiner Luftblasen austreten. Hierzu ist in dem Gasaustritt eine Vielzahl von Austrittslöchern vorgesehen, welche einen mittleren Lochdurchmesser von 0,1 mm bis 1 mm aufweisen. Die Anzahl an Austrittslöchern je cm² beträgt 5 bis 10. Der Gasaustritt ist aus einer perforierten EPDM-Membran gebildet.

Fig. 2 zeigt den Querschnitt einer erfindungsgemäßen Vorrichtung 1a/b, in welchen oberhalb eines gasführenden Teils 4 ein Gasaustritt 3 angeordnet ist. Das Verhältnis der äußeren Oberfläche des gasführenden Teils zur Oberfläche des Gasaustrittes ist ≤ 2,0. Der Gasaustritt 3 kann erfindungsgemäß am gasführenden Teil 4 mittels geeigneter Schnellverschlussmedien befestigt sein, um einen einfachen Austausch des Gasaustritts 3 zu gewährleisten.

## Patentansprüche

1. Vorrichtung zum Einbringen von gasförmigen Oxidationsmitteln in eine Waschflüssigkeit einer Rauchgasentschwefelungsanlage, wobei die Vorrichtung einen Anschlussabschnitt, einen gasführenden Teil und einen Gasaustritt aufweist, **dadurch gekennzeichnet, dass** die Vorrichtung ringförmig, stabförmig, domförmig, tellerförmig, dreieckig oder quadratisch ausgebildet ist und der Gasaustritt durch eine perforierte Membran, ein Gitter, eine Lochblende, einer porösen Keramik oder einem porösen Kunststoff gebildet ist und der Gasaustritt mit dem Anschlussabschnitt über den gasführenden Teil verbunden ist.

2. Vorrichtung gemäß Anspruch 1, wobei der Gassaustritt Austrittslöcher und/oder Austrittsschlitze mit einem mittleren Lochdurchmesser von 0,01 mm bis 5 mm aufweist, bevorzugt 0,1 mm bis 1,2 mm aufweist.

3. Vorrichtung gemäß Anspruch 2, wobei der Gasaustritt wenigstens 2 Austrittslöcher je cm², bevorzugt wenigstens 4 Austrittslöcher je cm² aufweist.

4. Vorrichtung gemäß einem der vorhergehenden Ansprüche, wobei das Verhältnis der äußeren Oberfläche des gasführenden Teils zur Oberfläche des Gasaustrittes ≤ 2,0 ist.

5. Vorrichtung gemäß einem der vorhergehenden Ansprüche, wobei der Gasaustritt aus einer perforierten EPDM-Membran gebildet ist.

6. Vorrichtung gemäß einem der Ansprüche 1 bis 4, wobei der Gasaustritt aus einem Kunststoff- oder Edelstahlgitter gebildet ist.

7. Vorrichtung gemäß einem der Ansprüche 1 bis 4, wobei der Gasaustritt aus einer Kunststoff- oder Edelstahllochblende gebildet ist.

8. Vorrichtung gemäß Anspruch 1, wobei der Gasaustritt aus einer porösen Keramik auf Basis von Silikat, Aluminiumsilikaten oder Cordierit gebildet ist.
